(19) Europäisches Patentamt
European Patent Office
Office européen des brevets

(11) **EP 1 409 297 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(51) Int Cl.:
***B60R 21/01*** *(2006.01)*

(21) Anmeldenummer: **02754267.9**

(22) Anmeldetag: **25.06.2002**

(86) Internationale Anmeldenummer:
**PCT/DE2002/002317**

(87) Internationale Veröffentlichungsnummer:
**WO 2003/008239 (30.01.2003 Gazette 2003/05)**

(54) **VERFAHREN UND VORRICHTUNG ZUR ANSTEUERUNG DER AUSLÖSUNG VON PASSIVEN SICHERHEITSSYSTEMEN SOWIE ANWENDUNG DAVON**

METHOD AND DEVICE FOR CONTROLLING THE TRIGGERING OF A PASSIVE SECURITY SYSTEM AND THE USE THEREOF

PROCEDE ET DISPOSITIF SERVANT A AMORCER LE DECLENCHEMENT DE SYSTEMES DE SECURITE PASSIFS ET LEUR UTILISATION

(84) Benannte Vertragsstaaten:
**DE FR GB SE**

(30) Priorität: **14.07.2001 DE 10134331**

(43) Veröffentlichungstag der Anmeldung:
**21.04.2004 Patentblatt 2004/17**

(73) Patentinhaber: **ROBERT BOSCH GMBH**
**70442 Stuttgart (DE)**

(72) Erfinder: **ROELLEKE, Michael**
**71229 Leonberg-Hoefingen (DE)**

(56) Entgegenhaltungen:
WO-A-02/04258          WO-A-98/58822
DE-A- 3 608 525        DE-A- 10 010 905
DE-A- 19 936 819

• PHEN R L ET AL: "Occupant Protection Advanced Technology" JET PROPULSION LAB PROGRESS REPORT, XX, XX, April 1998 (1998-04), XP002137509

**Beschreibung**

Stand der Technik

Die Erfindung betrifft ein Verfahren und eine Vorrichtung zur Ansteuerung der Auslösung von passiven Sicherheitssystemen wie Airbags in Fahrzeugen und zum Erfassen von einen vorliegenden gefährlichen Aufprall interpretierende Kriterien sowie die Anwendung des Verfahrens bzw. der Vorrichtung.

Aus WO 98/5822 A ist eine Vorrichtung zum Steuern eines Insassenschutzmittels eines Kraftfahrzeugs bekannt, bei der mittels einer Mustererkennung eines Beschleunigungssignals auf die Eindringtiefe eines Hindernisses in das Kraftfahrzeug geschlossen wird um daraus eine Aufprallgeschwindigkeit zu bestimmen. Aus DE 100 10 905 A1 ist ein Insassenschutzsystem mit einem Frontsensor und einem Innenraumsensor bekannt, bei dem Auslöseschwellen für das Signal des Innenraumsensors durch ein Schaltsignal des Frontsensors verändert werden. Die Schaltsignale werden im Frontsensor durch eine Schwellenabfrage bestimmt.

Zum Schutz der Insassen eines Fahrzeuges werden diese zunehmend serienmäßig mit passiven Sicherheitssystemen versehen, insbesondere mit Airbags. Abhängig von der Art und der Schwere des jeweiligen Aufralles sollen diese so ausgelöst werden, daß der betreffende Insasse des Fahrzeuges ausreichend sanft gegen den aufgeblasenen Airbag trifft und abgebremst wird. Beispielsweise ist es üblich, eine zweistufige Zündung eines Airbags durchzuführen und den zeitlichen Abstand zwischen beiden Zündvorgängen zu steuern. Klassisch erfolgt die Ansteuerung der Auslösung, wenn das abrupte Abbremsen des Fahrzeuges bei Aufprall gegen ein Hindernis einen Schwellenwert überschreitet, wobei diese Ansteuerung mit Hilfe eines an der starren Tragkonstruktion des Fahrzeuges angebrachten der Ansteuereinheit zugeordneten Beschleunigungssensors erfolgt. Zunehmende Bedeutung kommt der Vermeidung von Fehlauslösungen zu, insbesondere bei niedrigen Fahrgeschwindigkeiten. Aus Produkthaftungsgründen aber auch aufgrund von vom Gesetzgeber vorgegebenen Prüfungsvorschriften für eine Bauartzulassung ergibt sich die Forderung die Aufprallgeschwindigkeit, insbesondere bei niedrigen Fahrgeschwindigkeiten, jedenfalls der Größe nach möglichst so genau zu erfassen, daß auch nahe beieinander liegende niedrige Geschwindigkeiten diskrirninierbar sind. Dies ist mit herkömmlich bei Fahrzeugen verwendeten Geschwindigkeitssensoren jedenfalls dann nicht möglich, wenn die üblichen Meßtoleranzen von ± 10% nicht ausreichen die Diskriminierung sicher durchzuführen zumal weitere Streuungsparameter wie Fahrzeug-Alterung und dergleichen zu berücksichtigen sind.

Es ist daher Aufgabe der Erfindung eine Möglichkeit anzugeben, wie insbesondere bei niedrigen Fahrgeschwindigkeiten ein verwertbares Maß für die Aufprallgeschwindigkeit ermittelt werden kann.

Die Aufgabe wird durch die Merkmale der unabhängigen Ansprüche gelöst.

Die Erfindung wird durch die Merkmale der anhängigen Ansprüche weitergebildet.

Besondere Anwendungen sind in den Anwendungsansprüchen gekennzeichnet.

Das wesentliche der Erfindung liegt in der Erkenntnis, daß zwischen dem ersten Aufprall gegen ein Hindernis und dem Beginn der Verformung der starren Teile der Fahrzeugkonstruktion eine gewisse Zeit vergeht, während der deformierbare Teile der Fahrzeugkonstruktion deformiert werden, wobei dieser zeitliche Verlauf der Aufprallgeschwindigkeit im wesentlichen proportional ist und somit als Maß für die Aufprallgeschwindigkeit herangezogen werden kann, was zwar nur für nach Steifigkeit und Masse identische Barrieren gilt, welche allerdings bei Prüfungsvorschriften vorgegeben sind. Besondere Bedeutung kommt der Erfassung des Aufprallbeginnes bspw. mittels eines Aufprallschalters und der Erfassung des Übergangs zwischen einer geringen und einer starken Beschleunigung bzw. Verzögerung zu. Insbesondere letzterer Zeitpunkt kann durch Auswertung von Integralwerten von Beschleunigungssignalen festgelegt werden.

Hierdurch ist es möglich bei niedrigen Fahrgeschwindigkeiten auch eng beieinanderliegende Fahrgeschwindigkeiten voneinander zu diskriminieren, etwa zur Erfüllung der US-Forderung gemäß NHTSA 208 im Bereich des Low-Risk-Deployment. Dies ermöglicht es, die entsprechende Forderung zu erfüllen, nämlich eine Unterscheidung zwischen einem frontalen Aufprall gegen eine starre Barriere als Hindernis bei 26 km/h und bei 32 km/h zu unterscheiden. Ferner läßt sich auf der gleichen Grundlage auch der Überdeckungsgrad klassifizieren, insbesondere ob die gemäß der genannten Vorschrift vorliegende Überdeckung bei 100% vorliegt. Ferner kann auch auf der gleichen Grundlage, zusammen mit anderen Kriterien, eine Aussage darüber getroffen werden, ob ein Aufprall gegen eine harte Barriere vorliegt oder nicht vorliegt.

Die erhaltene Information kann dann in beliebigen Algorithmen zur Beeinflussung der Auslösebedingungen genutzt werden, gegebenenfalls mit zusätzlichen Kriterien.

Zeichnung

Die Erfindung wird anhand der in der Zeichnung dargestellten Ausführungsbeispielen näher erläutert. Es zeigen

Fig. 1    schematisch die Zuordnung verschiedener Sensoren und Auswerte und Rechenschaltungen im Hinblick auf die Ansteuerung der Auslösung eines Airbags gemäß der Erfindung,

Fig. 2    schematisch den grundsätzlichen Verlauf ermittelbarer Signale bei einem Aufprall,

Fig. 3    schematisch den Vergleich solcher Signalverläufe bei unterschiedlichen Fahrgeschwindigkeiten,

Fig. 4 schematisch die idealisierte Darstellung verschiedener Beschleunigungsübergangs-Zeitpunkte bei unterschiedlichen Fahrgeschwindigkeiten zur Ermittlung eines Maßes für die Aufprallgeschwindigkeit,

Fig. 5 schematischer den Verlauf der Integralwerte bei einer Beschleunigungsaufnahme im Fahrgastraum.

Beschreibung des Ausführungsbeispiels

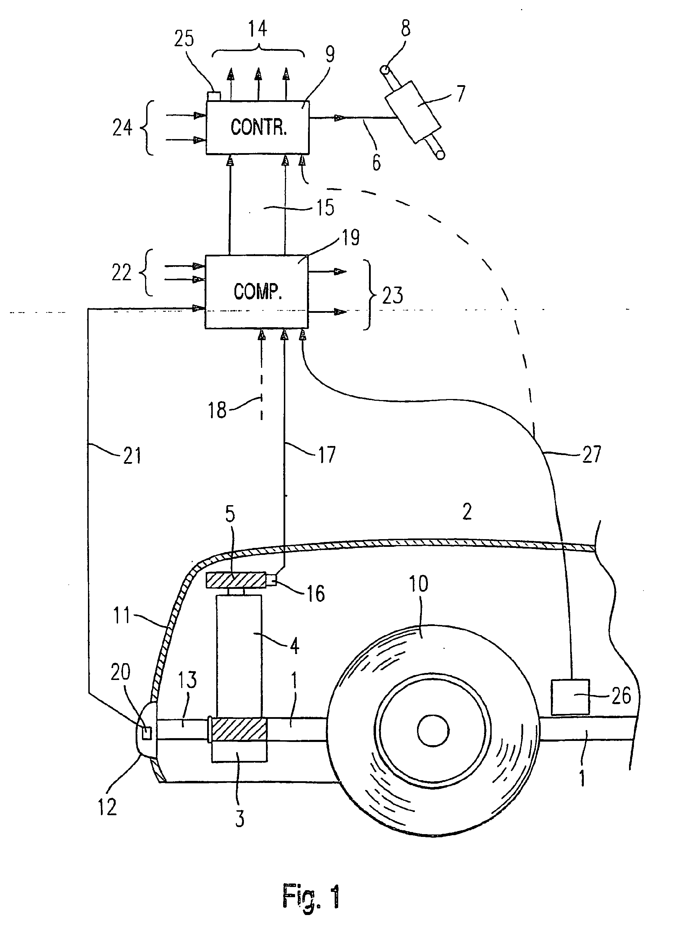

Figur 1 zeigt schematisch in dem Frontteil eines Fahrzeuges 2 zwei steife Längsträger 1, einen unteren Querträger 3 und einen oberen Querträger 5 einer steifen Tragkonstruktion, wobei zwischen den beiden Querträgern 3 und 5 ein Kühler 4 angeordnet ist. Bei den Längsträgern 1 kann es sich um einen rechtsseitigen und einen linksseitigen Träger 1 handeln. Von dieser Tragkonstruktion, insbesondere in Verlängerung der Längsträger 1, ragt ein leicht deformierbarer Träger 13 nach vorne vor, der im Bereich einer Motorhaube 11 eine Stoßfängeranordnung 12 trägt. Ferner ist ein Vorderrad 10 des Frontbereiches des Fahrzeuges 2 dargestellt.

Im Inneren des Fahrzeuges 2 sind, wie an sich üblich, auslösbare passive Sicherheitssysteme vorgesehen, wie Gurtstrammer, Front-Airbags, Seiten-Airbags und dergleichen. In Figur 1 ist schematisch ein in ein Lenkrad 8 integrierter Front-Airbag 7 dargestellt, dessen Treibladung(en) über eine Leitung 6 von einer Steuerung 9 aus ansteuerbar ist/sind. Die Steuerung 9 empfängt eine Reihe von Eingangssignalen 24 von Zustandsgrößen des Fahrzeuges 2 und beurteilt auf der Grundlage solcher Eingangssignale 24, ob Kriterien vorliegen, aufgrund deren das Vorliegen eines Unfalles zu besorgen ist, der das Auslösen des oder der passiven Sicherheitssysteme notwendig macht, um den den jeweiligen Sicherheitssystemen zugeordneten Insassen zu schützen, etwa den Airbag 7 auszulösen. Die Steuerung 9 kann somit weitere Ausgangssignale 14 zu einer Auslösung weiterer passiver Sicherheitssysteme abgeben, einschließlich auch solcher Signale, die die Auslösung passiver Sicherheitssysteme für einen Beifahrer betreffen.

Ein wesentliches Kriterium für die Auslösung der passiven Sicherheitssysteme ist das Vorliegen eines Aufpralles gegen ein Hindernis wie eine Barriere oder ein vorausfahrendes oder entgegenkommendes anderes Fahrzeug. Es hat sich herausgestellt, daß das vorzeitige oder unnötige Auslösen eines Airbags außerordentlich gefährlich ist, andererseits ist auch eine zu späte Auslösung eines Airbags bei Vorliegen eines Unfalles gefährlich.

Dies hat den Gesetzgeber in zumindest einigen Ländern veranlaßt, ganz definierte Prüfkriterien für eine Bauartzulassung vorzuschreiben, was wieder erfordert, die den Prüfkriterien zugrundeliegenden Zustandskriterien des Fahrzeuges möglichst genau und ohne Zeitverzögerung erfassen zu können. Ein typisches Beispiel ist die US-Vorschrift NHTSA 208, die unter anderem fordert, zwischen einem frontalen Aufprall (Crash) gegen eine starre Barriere als Hindernis bei 26 km/h und bei 32 km/h zu unterscheiden. Im letzteren Fall soll auch noch ein Aufprallwinkel zwischen 0° und 30° möglich sein. Gesamtsysteme aus Fahrzeug und herkömmliche Sensoren aufweisender Sensorik zum Erfassen von Geschwindigkeiten haben eine typische Meßtoleranz von ± 10%, was bereits die Unterscheidung der beiden Geschwindigkeiten als kaum möglich erscheinen läßt. Darüber hinaus jedoch unterliegen nicht nur die Sensoren sondern auch andere Bauteile der Gesamtanordnung Schwankungen aufgrund Herstelltoleranzen und/oder Alterung. Darüber hinaus besteht auch eine Abhängigkeit von der Motorisierung und der Zuladung, die ebenfalls nicht vernachlässigbar ist.

Falls nun nicht die typische Meßtoleranz des Geschwindigkeitssensors deutlich herabgesetzt werden soll, was an technische und Kostengrenzen stößt, so ist es erforderlich, weitere Kriterien zu erfassen, die von den Sensoren unabhängig ist.

Dies ist in Fig. 1 schematisch durch weitere Eingangssignale 15 zur Ansteuerung 9 dargestellt.

Gemäß der vorliegenden Erfindung werden zur Erzeugung solcher weiterer Eingangssignale 15 von am Fahrzeug 2 vorgesehenen Sensoren stammende Eingangssignale in einer Auswerteschaltung 19 rechnerisch verarbeitet wie das im folgenden erläutert wird.

Gemäß der Erfindung wird zum einen der Beginn des Aufpralles erfaßt, bei dem in Fig. 1 dargestellten Ausführungsbeispiel mittels eines in der Stoßfängeranordnung 12 oder an dem deformierbaren Träger 13 angebrachten Aufprallschalters 20, dessen Signal über eine Leitung 21 der Auswerteschaltung 19 zugeführt wird. Ferner ist möglichst weit vorne, jedoch an der starren Tragkonstruktion ein Beschleunigungssensor 16 vorgesehen, dessen Ausgangssignal über eine Leitung 17 der Auswerteschaltung 19 zugeführt wird. Das Vorsehen eines derartigen Beschleunigungssensors 16 ist an sich in der älteren Patentanmeldung 101.... (internes Aktenzeichen R.38585) vorgeschlagen worden, um hinsichtlich einer optimalen Anpassung an die Aufprallschwere einen frühzeitigen Auslösezeitpunkt zu erreichen und die Vermeidung von Fehlauslösungen zu verbessern. Statt einem solchen Beschleunigungssensoren 16 können auch symmetrisch zur Fahrzeuglängsachse verteilt zwei solcher Beschleunigungssensoren 16 und entsprechend zwei Leitungen 17 und 18 zur Auswerteschaltung 19 vorgesehen sein. Wie weiter unten erläutert kann dies im vorliegenden Fall von weiterem Vorteil sein.

Gemäß der älteren Anmeldung wird das von dem Beschleunigungssensor 16 stammende Signal allerdings in der Auslöseschaltung 9 zur Einstellung einer Auslöseschwelle genutzt.

Gemäß der vorliegenden Erfindung wird das Ausgangssignal des Beschleunigungssensors 16 jedoch zur Bestimmung eines zweiten Zeitpunktes herangezogen, zu dem der Aufprall gegen das Hindernis auf die starre Tragkonstruktion des Fahrzeuges 2, insbesondere manifestiert durch eine Deformierung der Längsträger 1 übergreift.

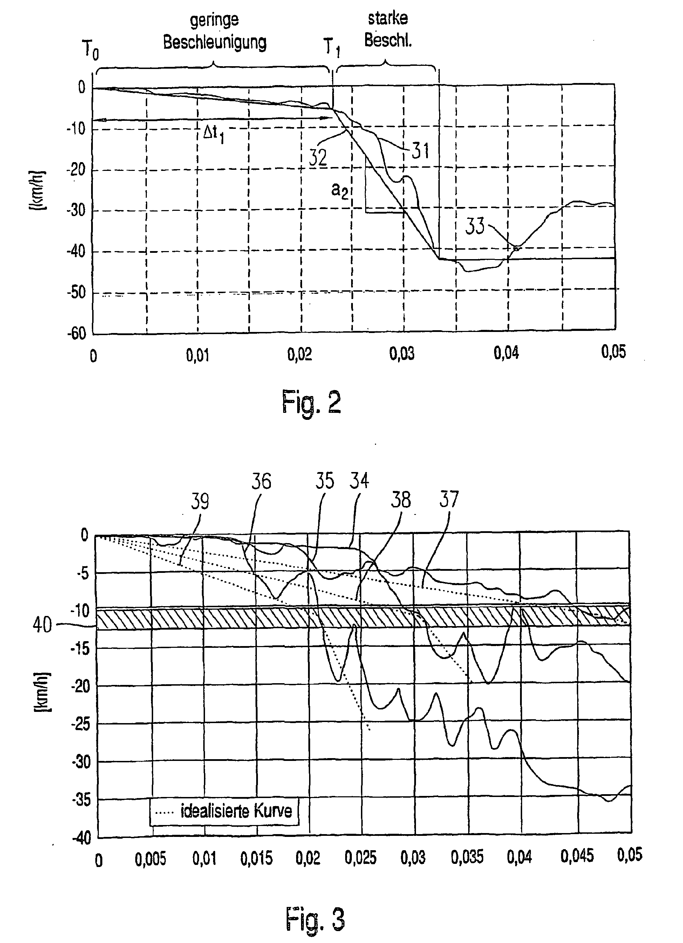

Dies sei anhand Figur 2 erläutert, die schematisch den Geschwindigkeitsverlauf über die Zeit an der Stelle des Beschleunigungssensors 16 bei einem Fahrzeug 2 zeigt, das mit einer Geschwindigkeit von 45km/h gegen ein deformierbares Hindernis bei einer 40%igen Überdeckung frontal aufprallt. Zu einem Zeitpunkt T0 erfaßt der Aufprallschalter 20 das Aufprallen des Fahrzeuges 2 gegen ein Hindernis. Wird anstelle eines unverzögert reagierenden Aufprall-Schalters 20 ein Beschleunigungssensor verwendet, z. B. eine weiter unten näher erläuterter Beschleunigungssensor 25 oder 26, so liegt, systembedingt und von der Aufprallgeschwindigkeit im wesentlichen unabhängig, der Zeitpunkt T0 jedenfalls bei niedriger Fahrgeschwindigkeit etwa 2 bis 3 ms nach der ersten Berührung der Stoßfängeranordnung 12 mit dem Hindernis. Mit fortschreitender Zeit verformt sich der deformierbare Träger 13 unter geringerer Verzögerung der Geschwindigkeit am Beschleunigungssensor 16. Zu einem Zeitpunkt T1 ist der deformierbare Träger 13 vollständig deformiert und beginnt sich nun die starre Tragkonstruktion, etwa der Längsträger 1 zu deformieren, was eine sehr starke Verzögerung am Beschleunigungssensor 16 und damit eine sehr starke Geschwindigkeitsverringerung zur Folge hat, was durch die starke Neigung a2 des entsprechenden idealisierten Verlaufes dargestellt ist. Während dieses Ablaufes des Aufprallvorganges ermittelt die Auswerteschaltung 9 aufgrund ihr zugeführter Signale (der Signale 13) zu welchem Zeitpunkt 33 der Airbag 7 entfaltet sein muß.

Diese starke Verzögerung im Bereich des Beschleunigungssensors 16 ist um so größer (steilere Neigung a2) je weicher die Befestigungsmittel zum Befestigen des Beschleunigungssensors 16 an der Tragkonstruktion des Fahrzeuges 2 ist. Bei gleichen Hindernissen oder Barrieren und im übrigen gleichen Aufprallbedingungen (Aufprallwinkel, Überdeckung usw.) kann aus der Zeitdifferenz zwischen T0, dem Aufprallbeginn-Zeitpunkt und dem Zeitpunkt T1, dem Beschleunigungsübergangs-Zeitpunkt, der Zeitdifferenz Δt1, auf die Aufprallgeschwindigkeit $V_{close}$ geschlossen werden, da

$$\Delta t1 \approx \frac{S}{V_{Close}}.$$ Damit ergibt sich, daß

$$\Delta t1 \approx \frac{1}{V_{Close}}$$ ist.

D. h. die Zeitdifferenz Δt1 ist ein außerordentliches zuverlässiges Maß für die Aufprallgeschwindigkeit, jedenfalls dann, wenn die beiden Zeitpunkt T0 und T1 hinreichend genau bestimmt werden können.

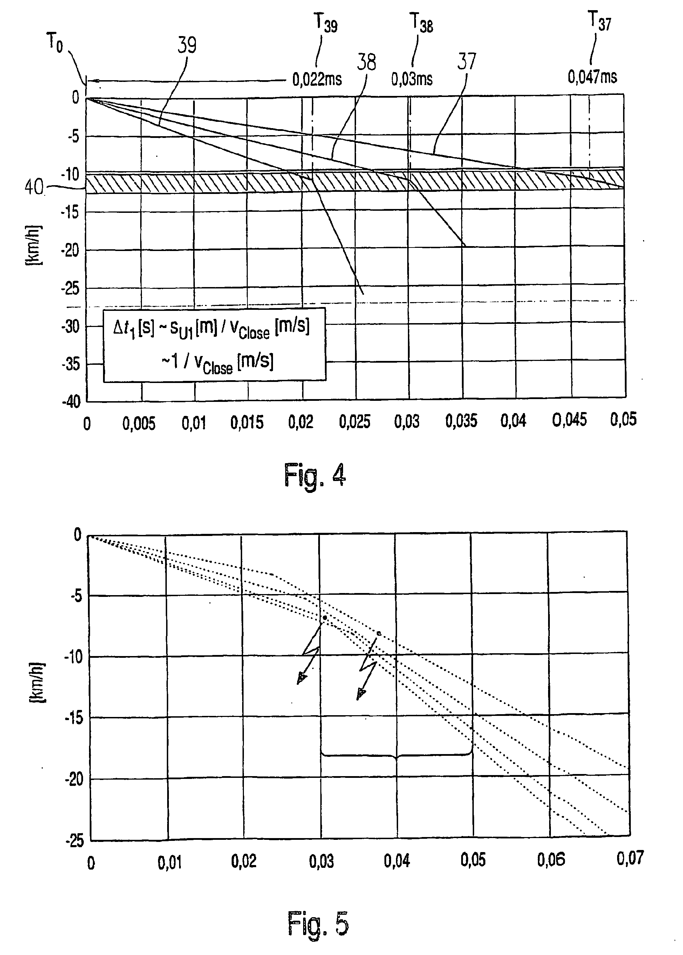

Die hierbei auftretenden Schwierigkeiten werden zunächst anhand von Figur 3 und Figur 4 näher erläutert. Analog zur Figur 2 zeigt Figur 3 typische Meßkurven 34, 35 und 36 und die entsprechenden in Strichlinien dargestellten idealisierten Kurven 37, 38 bzw. 39. Die Meßkurve 34 und damit die idealisierte Kurve 37 beschreibt einen Frontalaufprall mit 100% Überdeckung bei 15 km/h. Die Meßkurve 35 und die entsprechende idealisierte Kurve 38 entspricht einem Frontalaufprall mit 100% Überdeckung und bei 20 km/h. Die Meßkurve 36 und die zugehörige idealisierte Kurve 39 entspricht einem Frontalaufprall mit 100% Überdeckung bei 30 km/h. Der Übergang zwischen dem Bereich geringer Verzögerung und dem Bereich starker Verzögerung, der anhand Figur 2 erläutert worden ist, liegt dabei aufgrund z. B. der eingangs erwähnten Meßtoleranzen von ±10% innerhalb eines schraffierten bandförmigen Bereiches, der als graue Zone 40 betrachtet werden kann, d. h. die Erfassung des Zeitpunkte T1 und damit der Zeitdifferenz Δt1 ist mit dieser Unsicherheit behaftet. Dies ist nochmals deutlicher in Figur 4 herausgestellt, die die jeweiligen idealisierten Kurven nochmals deutlicher zeigt. Es ist jedoch deutlich zu sehen, daß trotz der durch die graue Zone 40 bedingten Ungenauigkeiten bei der Bestimmung der jeweiligen Beschleunigungsübergangs-Zeitpunkte T37, T38 bzw. T39 diese sehr deutlich voneinander diskriminierbar sind.

Darüber hinaus ist das Maß für die Aufprallgeschwindigkeit sehr genau bestimmbar.

Gemäß der vorliegenden Erfindung kann durch Auswertung des Beschleunigungssignals vom Beschleunigungssensor 16 zu dem hier interessierenden Geschwindigkeitssignal und damit zu dem hier interessierenden Beschleunigungsübergangs-Zeitpunkt T1 gelangt werden. Das Beschleunigungssignal (über die Leitung 17) wird in der Auswerteschaltung 19 über die Zeit integriert. Daher kann die Geschwindigkeitsänderung pro Zeiteinheit rechnerisch ermittelt werden und damit der Beschleunigungsübergangs-Zeitpunkt T1 entsprechend bei Feststellen einer deutlichen Änderung der Geschwindigkeit pro Zeiteinheit festgelegt werden. Nachdem, wie sich aus Figur 3 und 4 ergibt, dieser Beschleunigungsübergangs-Zeitpunkt T1 innerhalb der grauen Zone 40, also im Bereich einer bestimmten Geschwindigkeitsabnahme liegt, kann auch ein Schwellenwert der Geschwindigkeitsabnahme für die Beurteilung, ob der Beschleunigungsübergangs-Zeitpunkt T1 erreicht ist, herangezogen werden. Diese Bestimmung kann in der Auswerteschaltung 19 oder auch in der Steuerung 9 erfolgen.

Um nun zwei sehr nahe zueinander liegende Aufprallgeschwindigkeiten voneinander diskriminieren zu können, können auch Zeitschwellenwerte festgelegt werden, die zweckmäßig durch Crashversuche ermittelt werden: Liegt die ermittelte Zeitdifferenz oberhalb eines bestimmten Schwellenwertes so liegt die niedrigere Aufprallgeschwindigkeit $V_{Close}$ vor. Bei niedrigen und wie oben erwähnt eng beieinander liegenden Aufprallgeschwindigkeiten ist dabei eine Ungenauigkeit hinsichtlich der Erfassung des Aufprallbeginn-Zeitpunktes T0 vernachlässigbar. Erst bei sehr stark auseinanderliegenden zu diskriminierenden Aufprallgeschwindigkeiten kommt der Genauigkeit der Erfassung des Aufprallbeginn-Zeitpunktes T0 möglicherweise gewisse Bedeutung zu.

Wie oben erwähnt kann der Aufprallbeginn-Zeitpunkt T0 mittels eines sehr weit vorne liegenden Aufprallschalters 20 bestimmt werden.

Eine andere Möglichkeit besteht darin, einen der Steuerschaltung 9 üblicherweise zugeordneten im Fahrzeuginneren an der Auslöse-Steuerschaltung (9) integrierten Beschleunigungssensor 25 heranzuziehen und/oder einen an der starren Tragkonstruktion angebrachten gesonderten Beschleunigungssensor 26 heranzuziehen, der über eine Leitung 27 mit der Auswerteschaltung 19 (oder, in Strichlinien dargestellt, mit der Auslöse-Steuerschaltung 9) verbunden ist: Überschreitet die Beschleunigung an einem solchen Beschleunigungssensor 25, 26 der Auslöse-Steuerschaltung 9 bzw. Auswerteschaltung 19 eine niedrige feste Beschleunigungsschwelle, die oberhalb von als Rauschsignale zu interpretierende Signalen liegt, so wird dies als Beginn eine Aufpralls interpretiert, wodurch der erwähnte Aufprallbeginn-Zeitpunkt T0 festgelegt ist. Die tatsächlichen Abweichungen davon sind jedenfalls bei den beim Ausführungsbeispiel einer Anwendung betrachteten niedrigen zu diskriminierenden Fahrgeschwindigkeiten bzw. Aufprallgeschwindigkeiten von vernachlässigbarer Bedeutung.

Wie vorstehend erwähnt, wird das Signal vom Beschleunigungssensor 16 für die Bestimmung des Beschleunigungsübergangs-Zeitpunktes $T_1$ herangezogen. Bei Vorsehen eines einzigen solchen Beschleunigungssensors 16 ist dieser zweckmäßig auf der Fahrzeuglängsachse angeordnet. Es können auch symmetrisch zur Fahrzeuglängsachse mehrere, insbesondere zwei Beschleunigungssensoren 16 vorgesehen sein, wie das schon erwähnt wurde. In diesem Fall wird die Geschwindigkeit aus dem Maximum des Integrals der Beschleunigungssignale beider Beschleunigungssensoren 16 gebildet.

Das Vorsehen zweier solcher symmetrisch angeordneter Beschleunigungssensoren 16 hat jedoch einen weiteren Vorteil, da darüber hinaus auch der Überdeckungsgrad ermittelt werden kann, was für die oben erwähnte Bauart Zulassungsprüfung von Bedeutung ist.

Bis zum Erreichen des Beschleunigungsübergangs-Zeitpunktes T1, also einer Integralwert-Schwelle durch mindestens einen der beiden frontseitigen Beschleunigungssensoren 16 werden schrittweise die jeweils getrennt ermittelten Einzelintegralwerte miteinander verglichen und zwar nicht laufend, sondern in Zeitabständen. Bei jedem Vergleich wird beurteilt, ob der eine Integralwert geringfügig größer ist als der andere Integralwert und bejahenden Falles wird ein laufender Zählerstand erhöht, andernfalls dieser Zählerstand erniedrigt. Bei Erreichen des Beschleunigungsübergangs-Zeitpunktes T1, also einer entsprechenden Integralschwelle wird der Zählerstand mit einem festen Schwellenwert verglichen, wobei hohe Zählerstände eine nur Teilüberdeckung von unter 60% anzeigen, vorausgesetzt, daß eine ausreichende Menge von Vergleichen durchgeführt worden sind, mindestens jedoch 10 Vergleiche. Zweckmäßig erfolgt ein Multiplizieren des einen Integralwertes mit einer Konstanten, die zwischen 1,1 und 1,2 liegt, wobei die Konstante fahrzeug(typ)spezifisch etwa mittels Crashversuchen ermittelt wird. Voraussetzung ist darüber hinaus, daß die Konstruktion des Fahrzeuges ein symmetrisches Knautschverhalten bei Aufprallen mit Teilüberdeckungen auf nur der rechten oder nur der linken Seite besitzt. Die Multiplikation mit der Konstanten erhöht die Robustheit der Überdeckungserkennung. Durch die Einbausituation muß nämlich von einem hohen Rauschpegel ausgegangen werden, dessen Einfluß kompensiert wird.

Der Überdeckungsgrad und die Starrheit des Hindernisses haben Einfluß auf den Integralwert des von einem/dem zentralen (einzigen) Beschleunigungssensor 25 bzw. 26 ermittelten Integralwertes. Alternativ kann/können auch der /die Beschleunigungssensor(en) 16 herangezogen werden. Bei zwei symmetrischen Beschleunigungssensoren 16 wird dann ein Mittelwert und/oder ein Maximalwert zur Auswertung herangezogen. Der Integralwert ist am höchsten bei einer Überdeckung von 100% und einem Aufprall auf eine harte Barriere als Hindernis. Durch Festlegen einer entsprechenden fahrzeug(typ)spezifisch bestimmten Schwelle oder eines Integralfensters kann dann auf das Vorliegen der genannten Bedingung (100% Überdeckung und Aufprall auf harte Barriere) geschlossen werden. Allerdings hat auch hier die Knautschzone des Fahrzeuges einen Einfluß und zwar einen außerordentlich großen Einfluß auf einen solchen Vergleichsvorgang. Dies zeigt die Darstellung in Fig. 5, wo kritische Überschneidungspunkte durch Blitze dargestellt sind. Die idealisierten Kurven zeigen von rechts nach links (unterer Bereich) jeweils das Verhalten bei einem Aufprall gegen eine starre Barriere mit 100% Überdeckung mit einer Geschwindigkeit von 20 km/h, 25 km/h, 26 km/h bzw. 30 km/h. Somit kann die Nutzung des Integralwertes bei einem einzigen zentralen Beschleunigungssensor 25 bzw. 26 zur Ermittlung der Überdeckung mit geringeren Genauigkeitsansprüchen genügen, allerdings zur Plausibilitätsüberprüfung wesentlich beigetragen.

Die erfindungsgemäß ermittelte Information über die Aufprallgeschwindigkeit entsprechend dem mindestens einen Ausgangssignal 15 der Auswerteschaltung 19, kann auch, gegebenenfalls unter weitergehender Auswertung als zusätzliche Ausgangssignale 23 anderen Einrichtungen eines Kraftfahrzeuges 2 zugeführt werden. Ebenso kann die Auswerteschaltung 19 weitere Eingangssignale 22 heranziehen, um die Ausgangssignale 15 und/oder die weiteren Ausgangssignale 23 erzeugen zu können.

Selbstverständlich können Auswerteschaltung 19 und Steuerschaltung 9 zu einer einzigen Baueinheit integriert sein.

Eine typische Berücksichtigung weiterer Eingangssignale 22, 24 ist eine Plausibilitätsbetrachtung unter Zugrundelegung der Fahrzeugeigengeschwindigkeit, wobei die Fahrzeugeigengeschwindigkeit allerdings nur für Aufprall-Vorgänge auf stehende barrierenartige Hindernisse aussagekräftig ist. Sie ist daher nur bei Crashversuchen sinnvoll, allerdings damit auch bei den oben erwähnten Bauart-Zulassungsprüfungen. Bei nichtstehenden Barrieren ergeben sich andere Situationen abhängig von der tatsächlichen Relativgeschwindigkeit zwischen dem Hindernis und dem betrachteten Fahrzeug.

Bei den bei der Anwendung betrachteten niedrigen Fahrgeschwindigkeiten und Aufprallgeschwindigkeiten besteht für den Integralwert die Forderung, daß die Fahrzeugkonstruktion ausreichende Stabilität besitzt, um die Sensierrichtung (der Beschleunigungssensoren 16 und 25) beizubehalten, jedenfalls bei einer Überdeckung von 100%. Daraus läßt sich eine Plausibilitätsprüfung dahingehend herleiten, daß bei deutlicher Überschreitung der geschätzten Aufprallgeschwindigkeit, etwa bei einer Überschreitung von mehr als 10%, auf eine andere Aufprallsituation geschlossen werden muß, nämlich auf einen Aufprall bei hoher Geschwindigkeit gegen ein weiches Hindernis.

Zweckmäßig ist dagegen die Verwendung an sich bekannter Precrash-Sensorik, welche aufgrund besonderer Kriterien Vorhersagen (Prädiktionen) im Hinblick auf einen zu erwartenden Aufprall macht. Ferner ist es zweckmäßig, die Relativgeschwindigkeit zu dem ein mögliches Hindernis darstellenden Objekt festzustellen und zu berücksichtigen.

Ausgehend von der erwähnten Feststellung einer Maße für die Aufprallgeschwindigkeit kann die Sicherheit bei der Auslösung eines Airbags 7 erhöht werden, insbesondere kann die der Aufprallgeschwindigkeit entsprechende Information in beliebigen Auslösealgorhithmen zu Beeinflussung der Auslösebedingungen von passiven Sicherheitssystemen, wie dem Airbag 7 genutzt werden. Beispielsweise kann bei Erkennung einer bestimmten Aufprallgeschwindigkeit die Auslösung einer zweiten Airbagstufe verhindert oder außerordentlich verzögert werden.

In besonderem Maße ist die vorliegende Erfindung geeignet sehr eng beieinanderliegende Aufprallgeschwindigkeiten voneinander zu diskriminieren, insbesondere bei frontalem Aufprall (entsprechend einem Aufprallwinkel von 0°) und ferner bei einer Überdeckung von 100% bei einem Aufprall gegen ein starres Hindernis. Somit ist die vorliegende Erfindung besonders geeignet, die gemäß der US-Vorschrift NHTSA 208 geforderte Diskriminierung zwischen einem Aufprall bei 26 km/h und einem Aufprall bei 32 km/h zu erreichen, insbesondere ohne daß Streuungen aufgrund Alterung und dergleichen negativen Einfluß hätten.

**Patentansprüche**

1. Verfahren zur Ansteuerung der Auslösung von passiven Sicherheitssystemen wie Airbags in Fahrzeugen und zum Erfassen von einen vorliegenden gefährlichen Aufprall interpretierende Kriterien, wobei der Zeitpunkt (T0) des Beginnes des Aufpralles eines Fahrzeuges (2) gegen das Hindernis erfasst wird, wobei der Zeitpunkt (T1;T37, T38, T39) des Überganges der Beschleunigung der starren Tragkonstruktion (1, 3, 5) des Fahrzeuges (2) von einer geringfügi- . gen Beschleunigung zu einer starken Beschleunigung erfasst wird, indem zur Bestimmung des Beschleunigungsübergangszeitpunktes ein Ausgangssignal eines im Frontbereich des Fahrzeuges (2) der starren Tragkonstruktion (1, 3, 5) vorgesehenen Beschleunigungssensors (16) herangezogen wird, wobei die Zeitdifferenz ($\Delta t1$) zwischen dem Aufprallbeginn-Zeitpunkt (T0) und dem Beschleunigungsübergangs-Zeitpunktes (T1) erfasst wird und aus dieser Zeitdifferenz ($\Delta t1$) auf die Aufprallgeschwindigkeit (vclose) geschlossen wird und wobei dieses Maß für die Aufprallgeschwindigkeit (vClose) als eines der Auslöse-Kriterien herangezogen wird.

2. Verfahren nach Anspruch 1, **dadurch gekennzeichnet, dass** der Integralwert des Beschleunigungssignales des an der Tragkonstruktion angeordneten Beschleunigungssensors (25) erfasst wird und bei Überschreiten eines niedrigen über dem Rauschpegel liegenden Schwellenwertes auf den Aufprallbeginn geschlossen wird.

3. Verfahren nach Anspruch 1 oder 2, **dadurch gekennzeichnet, dass** der Integralwert des Beschleunigungssignales eines im Frontbereich eines Fahrzeuges (2) an der Tragkonstruktion (1, 3, 5) angeordneten Beschleunigungssensors (16) mit einem Schwellenwert verglichen wird, der im Hinblick auf eine vorgegebene Fahrgeschwindigkeit dem Übergang zwischen geringer und starker Beschleunigung entspricht, wobei bei Überschreiten dieses Schwellenwertes auf den Beschleunigungsübergang geschlossen wird.

4. Verfahren nach Anspruch 3, **dadurch gekennzeichnet, dass** der Schwellenwert empirisch mittels Aufprallversuchen festgelegt wird.

5. Verfahren nach einem der Ansprüche 1 bis 4, **dadurch gekennzeichnet, dass** Integralwerte der Beschleunigungssignale von zwei im Frontbereich eines Fahrzeuges (2) an der Tragkonstruktion (1, 3, 5) symmetrisch zur Fahrzeuglängsachse angeordneten Beschleunigungssensoren (16) verglichen werden, die gegenseitige Abweichung jeweils dem Vorzeichen nach festgestellt wird und im Beschleunigungsübergangs-Zeitpunkt (T1) eines der Beschleunigungssensoren (16) oder eines Mittelwertes beider Beschleunigungssensoren (16) die Differenz-Anzahl der vorzeichenmäßigen Abweichungen erfasst wird, wobei die Höhe der Differenzanzahl ein Maß für die Überdeckung ist und/oder dass der Integralwert des Beschleunigungssignales eines im Frontbereich eines Fahrzeuges an der Tragkonstruktion (1, 3, 5) auf der Fahrzeuglängsachse angeordneten zentralen Beschleunigungssensors (16) der Größe nach mit empirisch ermittelten Schwellenwerten verglichen wird, wobei jeder Schwellenwert ein Maß für die Überdeckung bei vorgegebener Starre eines Hindernisses darstellt.

6. Verfahren nach einem der Ansprüche 1 bis 5, **dadurch gekennzeichnet, dass** die Fahrzeugeigengeschwindigkeit erfasst wird und zusammen mit dem/den Integralwert(en) einer Plausibilitätsprüfung dahingehend unterzogen wird, ob der/die Integralwert(e) sinnvoll verwendbar ist/sind.

7. Vorrichtung zur Ansteuerung der Auslösung von passiven Sicherheitssystemen wie Airbags in Fahrzeugen (2) und zum Erfassen von einen vorliegenden gefährlichen Aufprall interpretierende Kriterien, wobei einen Beschleunigungssensor (16) im Frontbereich eines Fahrzeuges (2) an der Tragkonstruktion (1, 3, 5) zur Erfassung des Übergangs zwischen einer geringen Beschleunigung zu einer starken Beschleunigung, einen Aufprallsensor am Fahrzeug (2) zur Erfassung des Beginnes des Aufpralles des Fahrzeuges (2) gegen ein Hindernis und **gekennzeichnet durch**, eine Auswerteschaltung (19), die die Zeitdifferenz ($\Delta$t1) zwischen dem Zeitpunkt (T0) des Aufprallbeginnes und dem Zeitpunkt (T1; T37, T38, T39) des Übergangs der Beschleunigung der starren Tragkonstruktion (1, 3, 5) des Fahrzeugs (2) von einer geringfügigen Beschleunigung zu einer starken Beschleunigung als Maß der Aufprallgeschwindigkeit ermittelt und zur Ansteuerung der Auslösung heranzieht.

8. Vorrichtung nach Anspruch 7, **dadurch gekennzeichnet, dass** der Aufprallsensor ein Aufprallschalter (20) ist, dessen Schließen den Aufprallbeginn-Zeitpunkt (T0) festlegt.

9. Vorrichtung nach Anspruch 7, **dadurch gekennzeichnet, dass** der Aufprallsensor durch einen an der Tragkonstruktion angeordneten Beschleunigungssensor (25) gebildet ist, wobei das Überschreiten des Integralwertes des Beschleunigungssignales von dem Beschleunigungssensor (25) eines Mindestgeschwindigkeits-Schwellenwertes den Aufprallbeginn-Zeitpunkt (T0) festlegt.

10. Vorrichtung nach einem der Ansprüche 7 bis 9, **da-**

**durch gekennzeichnet, dass** die Auswerteschaltung (19) einen Vergleich aufweist, der den Integralwert des durch den Beschleunigungssensor (16) im Frontbereich des Fahrzeuges (2) erfassten Beschleunigungssignals mit einem Schwellenwert vergleicht, wobei ein das Überschreiten dieses Schwellenwertes entsprechendes Signal den Beschleunigungsübergangs-Zeitpunkt (T1; T37, T38, T39) festlegt.

11. Vorrichtung nach Anspruch 10, **dadurch gekennzeichnet, dass** der Schwellenwert empirisch mittels Aufprallversuchen festgelegt ist.

12. Verfahren nach einer Vorrichtung nach einem der Ansprüche 7 bis 11, **gekennzeichnet durch** mehr als einen Beschleunigungssensor (16) im Frontbereich des Fahrzeuges (2), die in Bezug auf die Fahrzeuglängsachse symmetrisch verteilt angeordnet sind, wobei die Auswerteschaltung (19) zur Erfassung des Beschleunigungsübergangs die Ausgangssignale (Leitungen 17, 18) aller Beschleunigungssensoren (16) heranzieht.

13. Verfahren nach Anspruch 12, **dadurch gekennzeichnet, dass** die Integralwerte der Beschleunigungssignale mindestens zweier symmetrisch angeordneter Beschleunigungssensoren (16) in zeitlichem Abstand mehrmals verglichen werden, die gegenseitige Abweichung jeweils dem Vorzeichen nach festgestellt wird und im Beschleunigungsübergangs-Zeitpunkt die Differenzanzahl der vorzeichenmäßigen Abweichungen erfasst wird, wobei die Höhe der Differenzanzahl ein Maß für die Überdeckung ist, und/oder dass der Integralwert des Beschleunigungssignales eines in Bezug auf die Fahrzeuglängsachse zentralen Beschleunigungssensors (16) der Größe nach mit empirisch ermittelten Schwellenwerten verglichen wird, wobei jeder Schwellenwert ein Maß der Überdeckung bei vorgegebener Starre eines Hindernisses ist.

14. Vorrichtung nach einem der Ansprüche 7 bis 13, **gekennzeichnet durch** die Erfassung weiterer Kriterien wie Fahrzeugeigengeschwindigkeit, Differenzgeschwindigkeit zu einem erkannten Objekt und dergleichen und deren Ausnutzung zum Ausschluss fehlerhafter Interpretationen der erfassten Kriterien.

15. Anwendung des Verfahrens nach einem der Ansprüche 1 bis 6 und/oder der Vorrichtung nach einem der Ansprüche 7 bis 14, bei der Diskriminierung von Aufprallvorgängen bei niedrigen Aufprallgeschwindigkeiten.

16. Anwendung des Verfahrens nach einem der Ansprüche 1 bis 6 und/oder der Vorrichtung nach einem der Ansprüche 7 bis 14 und der Anwendung nach Anspruch 15, bei der Diskriminierung von Aufprallen mit 100%-Überdeckung gegen starre Hindernisse.

17. Anwendung nach Anspruch 15 oder 16 bei Crashtests.

## Revendications

1. Procédé pour commander le déclenchement de systèmes passifs de sécurité, comme des coussins d'air dans des véhicules, et pour détecter des critères qui interprètent un choc dangereux effectif, selon lequel on détecte

- l'instant (T0) auquel commence le heurt d'un véhicule (2) contre l'obstacle,
- l'instant (T1 ; T37, T38, T39) où l'accélération de la structure porteuse (1, 3, 5) rigide du véhicule (2) passe d'une faible accélération à une forte accélération, du fait que pour déterminer l'instant où l'accélération se transforme on a recours à un signal de sortie d'un capteur d'accélération (16) prévu sur la structure porteuse (1, 3, 5) rigide dans la zone avant du véhicule (2),
- la différence de temps (Δt1) entre l'instant (T0) où commence le choc et l'instant (T1) où l'accélération se transforme et on déduit la vitesse du heurt (vclose) à partir de cette différence de temps (Δt1), et

cette grandeur de la vitesse de heurt (vclose) est utilisée comme un des critères de déclenchement.

2. Procédé selon la revendication 1,
**caractérisé en ce que**
on détecte la valeur d'intégrale du signal d'accélération provenant du capteur d'accélération (25) placé sur la structure porteuse et on en déduit que le choc commence quand une valeur seuil inférieure au-dessus du niveau de bruit est dépassée.

3. Procédé selon la revendication 1 ou 2,
**caractérisé en ce que**
la valeur d'intégrale du signal d'accélération provenant d'un capteur d'accélération (16) placé sur la structure porteuse (1, 2, 3) dans la zone avant d'un véhicule (2) est comparée à une valeur seuil qui, concernant une vitesse de conduite prédéfinie, correspond à la transformation d'une accélération faible en une forte, on en déduit alors que l'accélération se transforme quand cette valeur seuil est dépassée.

4. Procédé selon la revendication 3,
**caractérisé en ce que**
la valeur seuil est déterminée empiriquement par des essais de choc.

5. Procédé selon l'une des revendications 1 à 4,
**caractérisé en ce que**
on compare des valeurs d'intégrale des signaux d'accélération provenant de deux capteurs d'accélération (16) placés sur la structure porteuse (1, 2, 3) dans la zone avant d'un véhicule (2) symétriquement par rapport à l'axe longitudinal du véhicule, l'écart mutuel est à chaque fois déterminé par le signe, et le nombre différentiel des écarts de signe est détecté à l'instant (T1) où l'accélération se transforme sur un des capteurs d'accélération (16) ou sur une moyenne des deux capteurs d'accélération (16), le niveau du nombre différentiel représentant une grandeur concernant le recouvrement et/ou
la valeur d'intégrale du signal d'accélération provenant d'un capteur d'accélération (16) central, placé sur l'axe longitudinal du véhicule, sur la structure porteuse (1, 3, 5), dans la zone avant d'un véhicule, pour ce qui est de la grandeur est comparée à des valeurs seuil déterminées empiriquement, chaque valeur seuil représentant une grandeur concernant le recouvrement quand la rigidité d'un obstacle est prédéfinie.

6. Dispositif selon l'une des revendications 1 à 5,
**caractérisé en ce que**
la vitesse propre du véhicule est détectée et soumise, conjointement avec la ou les valeurs d'intégrale, à une vérification de vraisemblance qui établit si la ou les valeurs d'intégrales est ou sont raisonnablement utilisables.

7. Dispositif pour commander le déclenchement de systèmes passifs de sécurité, comme des coussins d'air dans des véhicules (2), et pour détecter des critères qui interprètent un choc dangereux effectif, comportant un capteur d'accélération (16) placé sur la structure porteuse (1, 3, 5) rigide dans la zone avant du véhicule (2) et destiné à détecter qu'une faible accélération se transforme en une forte accélération et inversement ainsi qu'un capteur de choc situé sur le véhicule (2) et destiné à détecter le moment où le véhicule (2) commence à heurter un obstacle,
**caractérisé par**
un circuit d'exploitation (19) qui détermine comme grandeur pour la vitesse de heurt la différence de temps (Δt1) entre l'instant (T0) où commence le choc et l'instant (T1 ; T37, T38, T39) où l'accélération de la structure porteuse (1, 3, 5) rigide du véhicule (2) passe d'une faible accélération se transforme à une forte accélération et l'utilise pour commander le déclenchement.

8. Dispositif selon la revendication 7,
**caractérisé en ce que**
le capteur de choc est un commutateur de choc (20) dont la fermeture détermine l'instant (T0) où commence le choc.

9. Dispositif selon la revendication 7,
**caractérisé en ce que**
le capteur de choc est formé par un capteur d'accélération (25) placé sur la structure porteuse, le moment où la valeur d'intégrale du signal d'accélération du capteur d'accélération (25) dépasse une valeur seuil de vitesse minimale détermine l'instant (T0) où commence le choc.

10. Dispositif selon l'une des revendications 7 à 9,
**caractérisé en ce que**
le circuit d'exploitation (19) compare à une valeur seuil la valeur d'intégrale du signal d'accélération détecté par le capteur d'accélération (16) dans la zone avant du véhicule (2), un signal qui correspond au dépassement de cette valeur seuil détermine l'instant (T1 ; T37, T38, T39) où l'accélération se transforme.

11. Dispositif selon la revendication 10,
**caractérisé en ce que**
la valeur seuil est déterminée empiriquement par des essais de choc.

12. Procédé d'après un dispositif selon l'une des revendications 7 à 11,
**caractérisé par**
plusieurs capteurs d'accélération (16) situés dans la zone avant du véhicule (2) et répartis symétriquement par rapport à l'axe longitudinal du véhicule, le circuit d'exploitation (19) ayant recours aux signaux de sortie (lignes 17, 18) de tous les capteurs d'accélération (16) pour détecter que l'accélération se transforme.

13. Procédé selon la revendication 12,
**caractérisé en ce que**
les valeurs d'intégrale des signaux d'accélération provenant d'au moins deux capteurs d'accélération (16) symétriques sont comparées plusieurs fois dans le temps, l'écart mutuel est à chaque fois déterminé par le signe, et le nombre différentiel des écarts de signe est détecté à l'instant où l'accélération se transforme, le niveau du nombre différentiel représentant une grandeur concernant le recouvrement et/ ou
la valeur d'intégrale du signal d'accélération provenant d'un capteur d'accélération (16) central par rapport à l'axe longitudinal du véhicule, pour ce qui est de la grandeur est comparée à des valeurs seuil déterminées empiriquement, chaque valeur seuil représentant une grandeur concernant le recouvrement quand la rigidité d'un obstacle est prédéfinie.

14. Dispositif selon l'une des revendications 7 à 13,
**caractérisé en ce que**

afin d'exclure de fausses interprétations des critères détectés d'autres critères, comme la vitesse du véhicule, la vitesse différentielle par rapport à un objet reconnu et d'autres comparables sont utilisés.

15. Utilisation du procédé selon l'une des revendications 1 à 6 et/ou du dispositif selon l'une des revendications 7 à 14,
pour distinguer des chocs qui ont lieu à de faibles vitesses.

16. Utilisation du procédé selon l'une des revendications 1 à 6 et/ou du dispositif selon l'une des revendications 7 à 14 et de l'utilisation selon la revendication 15,
pour distinguer des chocs contre des obstacles rigides avec une couverture de 100 %.

17. Utilisation selon la revendication 15 ou 16 dans des essais de collision.

**Claims**

1. Method for actuating the triggering of passive safety systems such as airbags in vehicles and for sensing criteria which interpret the presence of a hazardous impact, with the time (T0) at the start of the impact of a vehicle (2) against the obstacle being sensed, with the time (T1; T37, T38, T39) of the transition of the acceleration of the rigid supporting structure (1, 3, 5) of the vehicle (2) from a slight acceleration to a strong acceleration being sensed by an output signal of an acceleration sensor (16) which is provided in the front region of the vehicle (2) on the rigid supporting structure (1, 3, 5) being used to determine the acceleration transition time, with the difference ($\Delta$t1) between the time (T0) of the start of the impact and the acceleration transition time (T1) being sensed and the impact speed (vClose) being inferred from this time difference ($\Delta$t1), and with this measure of the impact speed (vClose) being used as one of the triggering criteria.

2. Method according to Claim 1, **characterized in that** the integral value of the acceleration signal of the acceleration sensor (25) which is arranged on the supporting structure is sensed, and when a low threshold value which is above the noise level is exceeded the start of the impact is inferred.

3. Method according to Claim 1 or 2, **characterized in that** the integral value of the acceleration signal of an acceleration sensor (16) which is arranged in the front region of a vehicle (2) on the supporting structure (1, 3, 5) is compared with a threshold value which, with respect to a predefined velocity corresponds to the transition between slight acceleration and strong acceleration, with the acceleration transition being inferred when this threshold value is exceeded.

4. Method according to Claim 3, **characterized in that** the threshold value is defined empirically by means of impact trials.

5. Method according to one of Claims 1 to 4, **characterized in that** integral values of the acceleration signals from two acceleration sensors (16) which are arranged symmetrically with respect to the longitudinal axis of a vehicle in the front region of the vehicle (2) on the supporting structure (1, 3, 5) are compared, the difference from one another is determined in each case in accordance with the sign and the difference number of the differences in terms of sign is sensed at the acceleration transition time (T1) of one of the acceleration sensors (16) or of a mean value of both acceleration sensors (16), with the magnitude of the difference number being a measure of the overlap and/or **in that** the integral value of the acceleration signal of a central acceleration sensor (16) which is arranged on the longitudinal axis of a vehicle in the front region of the vehicle on the supporting structure (1, 3, 5) is compared with respect to magnitude with empirically determined threshold values, with each threshold value constituting a measure of the overlap for a predefined degree of rigidity of an obstacle.

6. Method according to one of Claims 1 to 5, **characterized in that** the vehicle's own speed is sensed and is subjected, together with the integral value or values, to a plausibility check to determine whether the integral value or values, can be appropriately used.

7. Device for actuating the triggering of passive safety systems such as airbags in vehicles (2) and for sensing criteria which interpret the presence of a hazardous impact, with an acceleration sensor (16) being provided in the front region of a vehicle (2) on the supporting structure (1, 3, 5) for sensing the transition between a slight acceleration to a strong acceleration, an impact sensor being provided on the vehicle (2) for sensing the start of the impact of the vehicle (2) against an obstacle, and **characterized by** an evaluation circuit (19) which determines the time difference (Δt1) between the time (T0) of the start of the impact and the time (T1; T37, T38, T39) of the transition of the acceleration of the rigid supporting structure (1, 3, 5) of the vehicle (2) from a slight acceleration to a strong acceleration as a measure of the impact speed and uses it to actuate the triggering process.

8. Device according to Claim 7, **characterized in that** the impact sensor is an impact switch (20) whose closing defines the time (T0) of the start of the impact.

9. Device according to Claim 7, **characterized in that** the impact sensor is formed by an acceleration sensor (25) which is arranged on the supporting structure, with the fact that the integral value of the acceleration signal from the acceleration sensor (25) exceeds a minimum speed threshold value defining the time (T0) of the start of the impact.

10. Device according to one of Claims 7 to 9, **characterized in that** the evaluation circuit (19) has a comparison which compares the integral value of the acceleration signal sensed by the acceleration sensor (16) in the front region of the vehicle (2) with a threshold value, with a signal which corresponds to this threshold value being exceeded defining the acceleration transition time (T1; T37, T38, T39).

11. Device according to Claim 10, **characterized in that** the threshold value is defined empirically by means of impact trials.

12. Method according to a device according to one of Claims 7 to 11, **characterized by** more than one acceleration sensor (16) in the front region of the vehicle (2), which acceleration sensors (16) are arranged distributed symmetrically with respect to the longitudinal axis of the vehicle, with the evaluation circuit (19) using the output signals (lines 17, 18) of all the acceleration sensors (16) to sense the acceleration transition.

13. Method according to Claim 12, **characterized in that** the integral values of the acceleration signals of at least two symmetrically arranged acceleration sensors (16) are compared repeatedly at a time interval, the difference from one another is determined in each case in accordance with the sign and the difference number of the differences in terms of sign is sensed at the acceleration transition time, with the magnitude of the difference number being a measure of the overlap, and/or **in that** the integral value of the acceleration signal of an acceleration sensor (16) which is central with respect to the longitudinal axis of the vehicle is compared with respect to magnitude with empirically determined threshold values, with each threshold value being a measure of the overlap for a predefined degree of rigidity of an obstacle.

14. Device according to one of Claims 7 to 13, **characterized by** the sensing of further criteria such as the vehicle's own speed, speed differences with respect to a detected object and the like and their use for excluding faulty interpretations of the sensed criteria.

15. Application of the method according to one of Claims 1 to 6 and/or the device according to one of Claims 7 to 14 for discriminating impact processes at low impact speeds.

16. Application of the method according to one of Claims 1 to 6 and/or the device according to one of Claims 7 to 14 and the application according to Claim 15 for discriminating impacts with 100% overlap against rigid obstacles.

17. Application according to Claim 15 or 16 in crash tests.

Fig. 1

Fig. 2

Fig. 3

Fig. 4

Fig. 5